# EUROPEAN PATENT APPLICATION

(11) **EP 3 699 855 A1**
(43) Date of publication of application: **26.08.2020**
(21) Application number: 18869128.1
(22) Date of filing: 19.10.2018
(51) Int. Cl.: G06Q 20/34, G06Q 20/38

(54) **CARD ISSUANCE AND PAYMENT SYSTEM AND METHOD**

(30) Priority: 20.10.2017 KR 20170136686
(71) Applicant: Jeong, Hye Jin, Iksan-si, Jeollabuk-do 54625 (KR)
(72) Inventor: Jeong, Hye Jin, Iksan-si, Jeollabuk-do 54625 (KR)
(74) Representative: RGTH
(86) International application number: PCT/KR2018/012398
(87) International publication number: WO 2019/078667

(57) **Abstract**

A card issuing and payment system and method using a user terminal. Such a system and method include a user terminal and a card service providing server. The user terminal generates an encryption key and a decryption key, stores the decryption key, and transmits the encryption key together with a card issuing request signal to the card service providing server. The card service providing server, upon receipt of the request signal, verifies whether the card issuance is permissible. If the card issuance condition is satisfied, the server generates the card and encryptes the card information with the received encryption key. Then, the server transmits the encrypted cord information to the terminal. The user terminal decrypts the encrypted card information with the decryption key after receiving and installs an electronic card in the terminal with the decrypted information.

## Description

### TECHNICAL FIELD

The present invention relates to a card issuing and payment system and method using a user terminal such as a smart phone.

### BACKGROUND ART

In recent years, so-called fin-tech, which combines finance technology and IT technology, has attracted attention. PinTech, which is also considered as a transition of the financial paradigm, is expanding not only to the conventional online financial services, but also to offline financial services and financial platform construction services.

The electronic device in which the fin-tech is implemented may take various forms, such as a smartphone that can be carried by the user, or a wearable device that can be attached to a part of the user's body. Such electronic devices are rapidly becoming highly functional due to the development of information technology (IT) providing various functions to users.

For example, the manufacturers of the above-described electronic devices are making various efforts through collaboration with a credit card company or a bank to develop an electronic device and to build a payment system for realizing the fin-tech.

### [Related Art Documents]

Patent Document 1: Korean patent Application Laid-Open Publication No. 10-2014-0143036
Patent Document 2: Korean Patent No. 10-1739119

### DISCLOSURE OF INVENTION

### TECHNICAL PROBLEM

An object of the present invention's various embodiments is to provide a system and a method to apply for an electronic card via on-line using a user terminal, and to provide a system and a method for an issuance of the card and a payment with the card.

### TECHNICAL SOLUTION

According to an exemplary embodiment, a card issuing system using a user terminal may include a user terminal generating an encryption key and a decryption key and transmitting to a card service providing server the encryption key with a card issuance request signal and a user information.

The user terminal may also include the card service providing server generating a card information after receiving the encryption key, the card issuance request signal and the user information from the user terminal, ecrypting the card information by using the encryption key received from the user terminal and transmitting the encrypted card information to the user terminal.

Such a user terminal may decrypt the encrypted card information received from the card service providing server by using the decryption key and installs a card with the decrypted card information in the user terminal.

Further, such a card service providing server may verify at least one condition for a card issuance with the user information received from the user terminal and generates the card information based on a result of the verification.

According to another exemplary embodiment, a method of a card issuance may include:
generating, by a user terminal, an encryption key and a decryption key, and saving, by the user terminal, the encryption key and the decryption key in the user terminal;
transmitting, by the user terminal, the encryption key and a card issuance request signal to a card service providing server;
generating, by the card service providing server, a card information after receiving the card issuance request signal, and encrypting, by the card service providing server, the card information by using the encryption key;
transmitting, by the card service providing server, the encrypted card information; and
decryting, by the user terminal, the encrypted card information with the decryption key, and installing, by the user terminal, a card with the decrypted card information in the user terminal.

In the above transmitting of the card issuance request signal, the user terminal transmits a user identifying information with the card issuance request to the card service providing server. signal.

In the above generating of the card information, the card service providing server verifies an identity and a credit of a user and generates the card information based on a result of the verification.

Additionally, the method may further include: transmiting, by the user terminal, a physical card request together with the card issuance request signal to the card service providing server, and transmitting, by the card service providing server, the generated card information to a card making server in response to the received physical card request;
making, by the card making server, a physical card, and delivering, by the card making server, the physical card to a user; and
verifying, by the user terminal, the delivered physical card with the decrypted card information; and applying, by the user terminal, a user registration to the card service providing server.

In the above verifying of the delivered physical card,
the card service providing server may transmit a card verification page after encrypting the card verification page with the received encryption key, and
the user terminal may decrypt the encrypted card verification page by using the decryption key for the user registration.

According to another exemplary embodiment, a card issuing system may include a user terminal requesting a card issuance.

Also, the card issuing system may include a card service providing server having an encryption key and a decryption key.

Such a card service providing server may generate a card in response to the requesting of the user terminal, encrypt the card by using the encryption key and transmit the encrypted card to the user terminal.

Also, such a user terminal may install the encrypted card which is received from the card service providing server in the user terminal.

According to another exemplary embodiment, a method of a card payment which includes a card service providing server where an encryption key and a decryption key are stored, and a user terminal where a card information encrypted by the encryption key is installed in the user terminal may include:
transmitting, by the user terminal, a payment information and the encrypted card information to the card service providing server to request a card payment approval; and
decrypting, by the card service providing server, the encrypted card information by using the decryption key, and approving, by the card service providing server, a payment for the request of the user terminal.

According to an exemplary embodiment, a method of a card payment may include: requesting, by a user terminal, a card issuance to a card service providing server;
encrypting, by the card service providing server, a card information, and transmitting, by the card service providing server, the encrypted card information to the user terminal; and
installing, by the user terminal, the encrypted card information in the user terminal.

In the above transmitting of the encrypted card information, the card service providing server transmits a single use serial number together with the encrypted card information to the user terminal for verification of the card information, and
in the above installing of the encrypted card information, the user terminal returns the transmitted single use serial number to the card service providing server to activate a card.

According to another exemplary embodiment, a method of a card issuance may include: generating, by a user terminal, an encryption key and a decryption key; storing, by the user terminal, the decryption key in the user terminal; transmitting, by the user terminal, the encryption key and a card issuance request signal to a card service providing server; encrypting, by the card service providing server, a card information with the transmitted encryption key; transmitting, by the card service providing server, the encrypted card information to the user terminal; decrypting, by the user terminal, the encrypted card information with the stored decryption key; and installing, by the user terminal, the decrypted card information in the user terminal.

In the above requesting of the card issuance, the user terminal may transmit a user identity information to the card service providing server.

According to another exemplary embodiment, a method of a card issuing may include: receiving, by a card service providing server, an encryption key and a card issuance request from a user terminal; generating, by the card service providing server, a card information; encrypting, by the card service providing server, the card information with the encryption key; and transmitting, by the card service providing server, the encrypted card information to the user terminal.

### ADVANTAGEOUS EFFECTS

According to various embodiments of the present invention, since the card information can be decrypted only by the terminal to which the card issuance is requested and the electronic card can be installedin the terminal, security of the card information is strengthened. Also, a separate apparatus and method for security are not required except the terminal, so there are economic benefits.

In the card issuing method according to the embodiment of the present invention, the decryption key capable of decrypting the encrypted card information is stored only in the terminal to which the card issuing application is applied so that the card information can be delivered most safely. In addition, since it is possible to install the electronic card only on the terminal to which the electronic card is applied, it is possible to reduce the time and cost required for issuing the separate plastic card.

In a method of issuing a card according to another embodiment of the present invention, a terminal does not have a decryption process by encrypting a number in a server and storing it in a terminal for which a card issuance is requested. Also, it is possible to store the card information more securely because the electronic card issuance can be applied in a simple manner without decrypting the card information and decrypting is not used even when the payment approval is requested.

### BRIEF DESCRIPTION OF THE DRAWINGS

FIG. 1 is a schematic view of a card issuing and payment system using a user terminal according to an embodiment of the present invention.
FIG. 2 is a flowchart illustrating a method of issuing a card using a user terminal according to an embodiment of the present invention.
FIG. 3 is a flowchart illustrating a card issuing method using a user terminal according to another embodiment of the present invention.
FIG. 4 is a flowchart illustrating a method of issuing and payment of a card using a user terminal according to another embodiment of the present invention.
FIG. 5 is a flowchart illustrating a method of issuing and payment of a card using a user terminal according to another embodiment of the present invention.
FIG. 6 is a flowchart illustrating a card payment method according to another embodiment of the present invention.
FIG. 7 is a flowchart illustrating a card issuing method according to another embodiment of the present invention.

### DETAILED BRIEF DESCRIPTION

Hereinafter, various embodiments will be described with reference to the accompanying drawings. However, it should be understood that the techniques described herein are not intended to be limited to any particular embodiment, but rather include various modifications, equivalents, and/or alternatives of the embodiments. In the description of the drawings, similar reference numerals may be used for similar elements. The terms, "configured to (or set up for)" may not necessarily means "specifically designed to." Instead, in some circumstances, the expression, "a device configured to" may mean that the device can do with other devices or components. For example, a processor configured (or set up) to perform A, B and C may be implemented as a processor dedicated to performing the operation (e.g., an embedded processor or Application-specific integrated circuit (ASIC)), or a generic-purpose processor (e.g., a CPU or an application processor) that can perform the corresponding operations with one or more software programs.

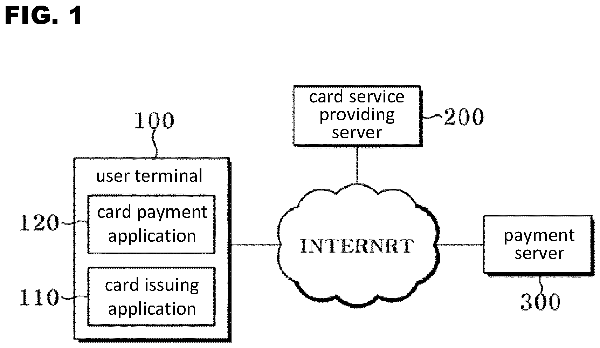

FIG. 1 is a view schematically showing a card issuing and payment system using a user terminal according to an embodiment of the present invention. As illustrated, the card issuing and billing system using the user terminal according to an exemplary embodiment may include a user terminal 100, a card service providing server 200, and a card payment server 300. The card service providing server 200 and the card payment server 300 may be implemented as a single server.

Each of the devices included in the card issuing and payment system shown in FIG. 1 may be connected to each other via a network. For example, each component can be connected to each other via a mobile communication network, an Internet network, or a wireless local area network (e.g. near field communication (NFC), wireless-fidelity (Wi-Fi) or magnetic stripe transmission (MST).

The user terminal 100 stores an card issuing application 110 and a card payment application 120 which are executed upon issuance and payment of the card. The user terminal 100 may be a variety of terminals such as a smart phone, a tablet, a PC, a wearable device, etc., in which an application software can be installed. The user terminal 100 may download the card issuing application 110 and the card payment application 120 through the Internet connected via the wired / wireless communication network. The card issuing application 110 and the card payment application 120 may be downloaded by accessing the card service providing server 200 or through an app store. The user terminal 100 receiving the card information can install the electronic card in the terminal 100 by installing it in a storage space such as a universal subscriber identity module (USIM) chip, an internal memory, an external memory, or the like. The electronic card may be at least one of a mobile card, an app card, a cash card, and a credit card. The card issuing application 110 may generate an encryption key and a decryption key in the user terminal 100 when the card issuing service starts. The generated encryption key is transmitted to the card service providing server 200 when the card issuance request is made, and the decryption key can be stored in a space such as a USIM chip, an internal memory, an external memory, and the like of the user terminal 100. The decryption key may be used when the card information encrypted with the encryption key is transmitted from the card service providing server 200, and the electronic card according to the decrypted card information may be installed in the user terminal 100. The card payment application 120 may perform a payment using the electronic card installed in the terminal 100.

When the card issuance request is received from the user terminal 100, the card service providing server 200 may receive the personal information together with the encryption key to verify whether the card issuance condition is correct with the applicant's personal information and credit information and may generate a card when the card issuance condition is satisfied. Here, the card service providing server 200 may encrypt the card information of the card with the encryption key and transmits the encrypted information to the user terminal 100 of the applicant.

According to another embodiment, the card service providing server 200 may hold an encryption key and a decryption key, and upon receiving the card issuance request from the user terminal 100, generates a card, encrypts the card information with the encryption key and transmits to the terminal 100. When the card is used for a payment, after receiving the encrypted card information from the user terminal 100, the card information can be decrypted by the decryption key to process the card payment.

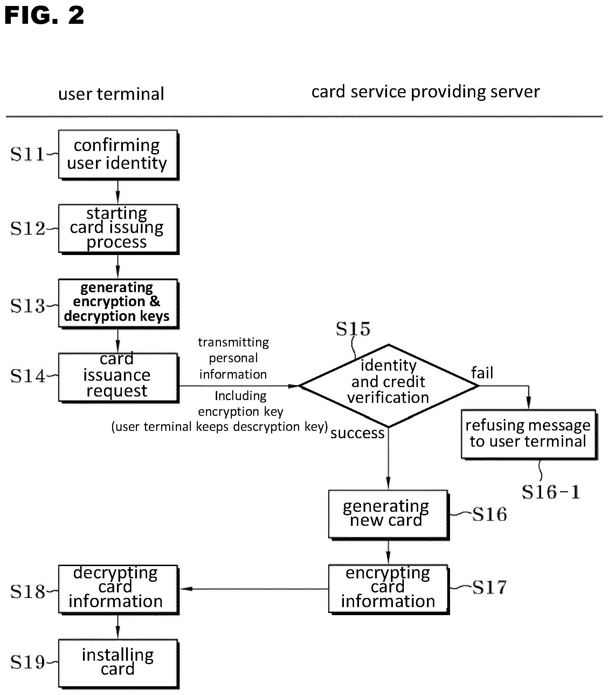

Fig. 2 is a flowchart illustrating a card issuing method using a user terminal according to the first embodiment of the present invention.

As shown in the figure, a method of issuing a card using the user terminal according to the first embodiment of the present invention is as follows. The card issuing application 110 may be downloaded to the user terminal 100 and executed. The card issuing application 110 may provide an interface related to issuing the card to the user. The card issuing app 110 may provide an interface regarding user authentication through identification and verification (ID&V). The user may log in to the registered card service web site through the card issuing application 110 (if the member is not registered, log in after signing up), and then the identity of the user may be confirmed (S11) by using one or more methods such as a previously issued credit card, an ID card, a certificate document, a mobile phone, ARS, or the like. When the card issuing application 110 starts the card issuing process (S12) executing the card issuing service, the card issuing app 110 may generate an encryption key and a decryption key (S13). Then, performs a card issuance request step (S14) by transmitting a card issuance request signal to the card service providing server 200. The card issuance request signal is transmitted to the card service providing server 200 together with the card applicant's personal information and the encryption key generated in the step S13. The personal information may include the information of the user terminal 100 and user's personal information. The encryption key may be stored in the card service providing server 200, and the user terminal 100 may keep the decryption key. When the card service providing server 200 receives the card issuance request signal, the card service providing server 200 may perform the identity verification and the credit verification step (S15) using the received personal information. The card service providing server 200 can confirm the user identity by using the authorized certificate stored in the user terminal or by the information of the user terminal 100, but there is no limitation on the user identity verification method. If the identity verification is unsuccessful, the card issuance nonpermission message is transmitted to the user terminal 100 (S16-1). If the authentication is successful, new card information may be generated (S16). The card information generated in step S16 may be encrypted (S17) with the encryption key transmitted to the card service providing server 200 in step S15. The encrypted card information may be transmitted to the user terminal 200. The user terminal 100 may decrypt the encrypted card information (S18) using the decryption key generated together with the encryption key in step S13 and may install the electronic card according to the decrypted card information in the user terminal 100 (S19).

When the card is issued using the user terminal 100 as described above, the card information can be decrypted only by the terminal 100 through which the card issuing application is applied, so that the electronic card can be installed with the encrypted card information only in the terminal 100. Therefore, the security of the card information is enhanced, and there is economical benefit because it does not need an additional device or method for the security. That is, in the card issuing method according to an exemplary embodiment, since the decryption key for decrypting the encrypted card information is stored only in the terminal 100 through which the card issuing application is applied, it is the safest way to transmit the card information for the card issuing. In addition, since it is possible to apply for an electronic card issuance by a simple way and to install the electronic card on a terminal 100 to which the electronic card is applied, there is an effect that the time and cost required for the issuing of a separate plastic card can be saved.

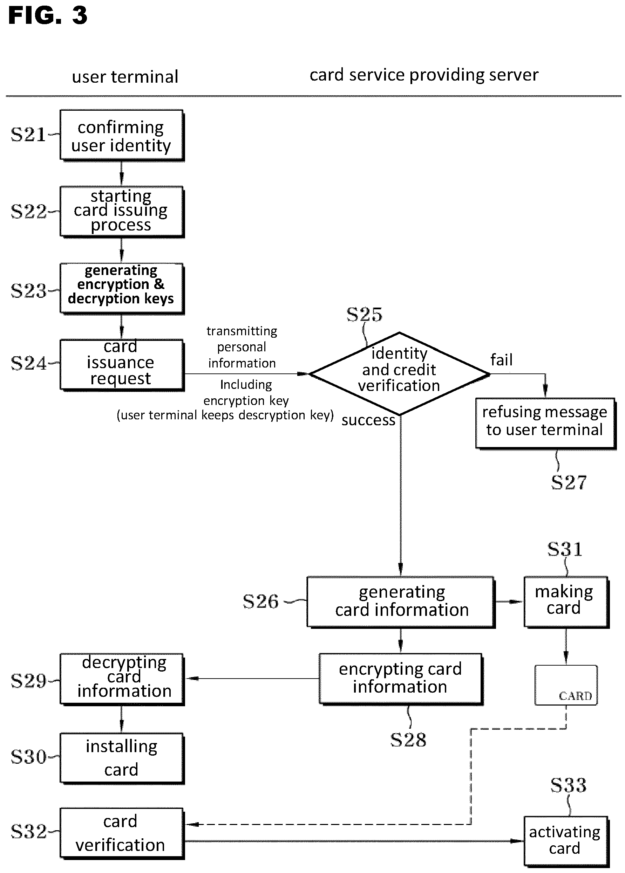

Fig. 3 is a flowchart illustrating a method of issuing a physical card together with an electronic card using a user terminal according to a second embodiment of the present invention.

As shown in the figure, the card issuing method using the user terminal according to the second embodiment is as follows. When the card issuing application 110 is downloaded to the user terminal 100 and executed, the user logs into the card service providing website and an identity checking may be performed for confirming the identity of the user (S21). When the card issuing application execution step for the card issuing process is started (S22) by the card issuing application 110, the card issuing application 110 may generate an encryption key and a decryption key (S23). Then the card issuing application 110 may transmit a card issuance request to the card service providing server 200 (S24). The encryption key generated in step S23 may be transmitted to the card service providing server 200 together with the personal information of the card applicant in the card issuance request signal. The personal information may include the information of the terminal 100 and the terminal's user. The encryption key may be stored in the card service providing server 200, and the decryption key may be stored in the user terminal 100. When the card service providing server 200 receives the card issuance request signal, the card service providing server 200 may perform the identity verification and the credit verification (S25) using the received personal information. If the identity verification and the credit verification are unsuccessful, a nonpermission of card issuance message may be transmitted to the user terminal 100 (S27). If the identity verification and the credit verification are successful, the card information may be generated (S26). The card information is transmitted to the physical card production server to produce a physical card (S31). The card information which is generated in step S23 and transmitted in step S25 may be encrypted in the card service providing server 200 with the encryption key (S28). The encrypted card information is transmitted to the user terminal 100, and the user terminal 100 may decrypt the encrypted card information with the decryption key generated together with the encryption key in step S23 (S29) Then, the electronic card is installed in the terminal 100 (S30). The physical card that is produced to the user in step S31 may be activated after performing the card verification step (S32) by using the user terminal 100. In the card verification step S32, the card verification page may be transmitted to the terminal 100 after being encrypted with the encryption key transferred in step S25 to the user terminal 100 and may be decrypted by using the decryption key generated and stored in step S23 in the user terminal 100, then the user registration is completed.

If a card is issued using the user terminal in the above-described manner, the card information can be decrypted only by the terminal that has applied for the card issuance, and the electronic card can be installed only in the terminal. For the physical card, the user verification is performed only by the terminal, so the security of the card information can be enhanced and there is no need for a separate apparatus or method for the security, which is advantageous in terms of economy.

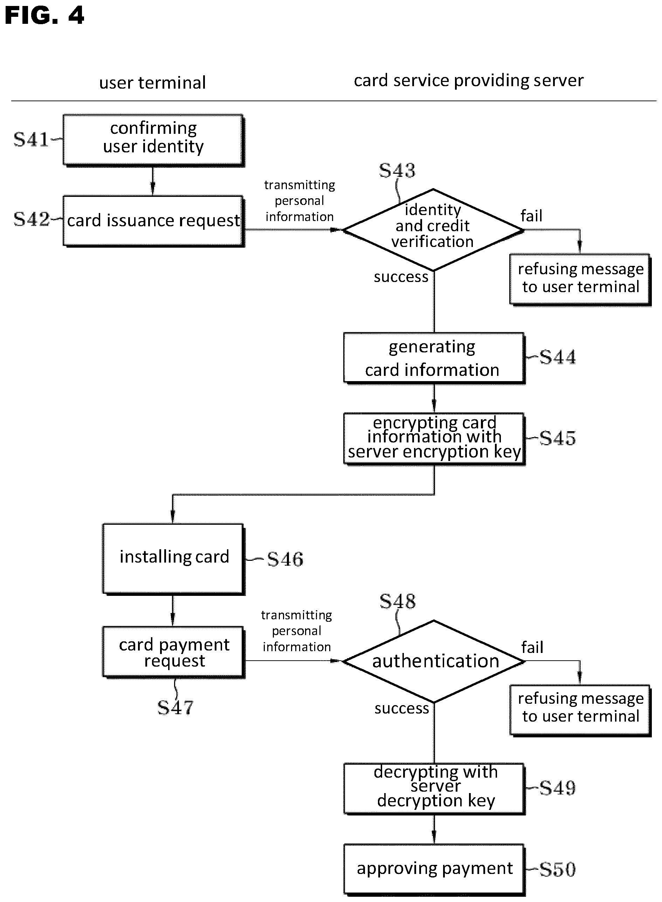

Fig. 4 is a flowchart illustrating a method of issuing and payment of a card using a user terminal according to a third embodiment of the present invention.

As shown in the figure, the card issuing and payment method using the user terminal according to the third embodiment of the present invention is as follows. When the card issuing application 110 is downloaded to the user terminal 100 and executed, the user logs into the card service providing website and an identity checking is performed (S41) for confirming the identity of the user. Then a card issuing request is performed (S42) by transmitting a card issuance request signal to the card service providing server 200. The card issuance request signal may include the card applicant's personal information. The personal information includes the information of the user terminal and the terminal's user. When the card service providing server 200 receives the card issuance request signal, the card service providing server 200 may perform the identity verification and the credit verification (S43) by using the received personal information. If the identity verification and the credit verification are unsuccessful, a nonpermission of card issuance message is transmitted to the user terminal 100. If the identity verification and the credit verification are successful, the card information is generated (S44). The card information may be encrypted with the server encryption key for an electronic card (S45). The encrypted card information is transmitted to the user terminal 100, and the electronic card may be installed in the user terminal 100 by using the card information encrypted with the server encryption key (S46). The card payment application 120 stored in the user terminal 100 can be used when the card payment is requested with the electronic card installed in step S46. The card payment application 120 may provide a user interface related to the payment. For example, the payment application 120 may provide a user interface regarding a card registration, a payment, or a transaction. In addition, the payment application 120 may provide an interface for an user authentication through, for example, identification & verification (ID & V). The card payment application 120 transmits a payment approval request including card information and personal information encrypted with the server encryption key to the card service providing server 200 (S47). The payment approval request signal including the card information encrypted by the server encryption key and the personal information of the user terminal 100 is transmitted to the card service providing server 200, and the card service providing server 200 may perform an authentication step (S48) by using the transmitted personal information. If the authentication is successful, the card service providing server 200 decrypts the card information encrypted with the server decryption key (S49) and approve the payment (S50).

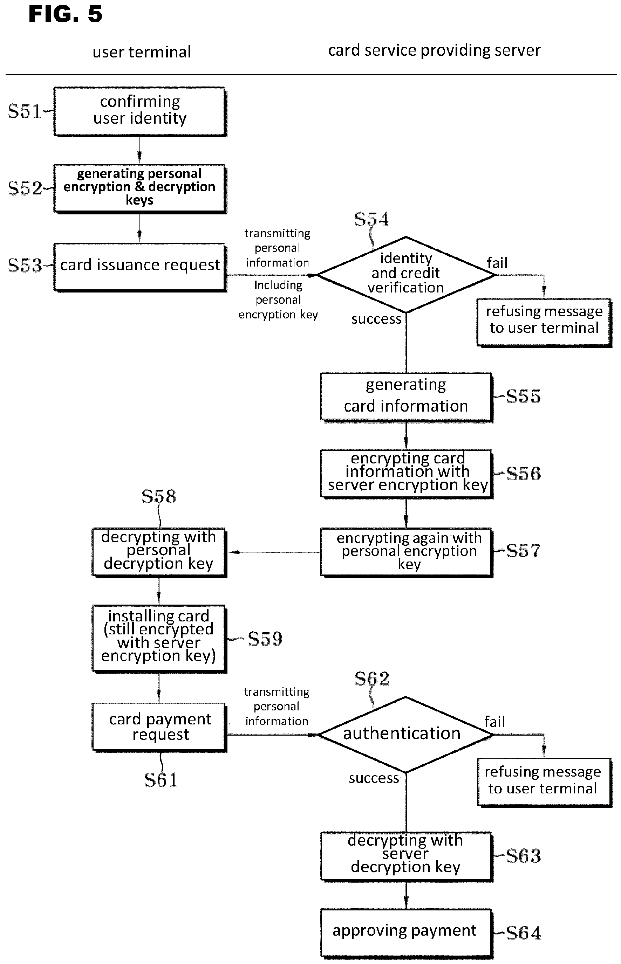

Fig. 5 is a flowchart illustrating a card issuing and payment method using a user terminal according to a fourth embodiment of the present invention.

As shown in the figure, the card issuing and payment method using the user terminal according to the fourth embodiment of the present invention is as follows. When the user downloads the card issuing application 110 to the user terminal 100 and executes the card issuing application 110, the user may log into the card service providing website and an identification step may be performed (S51) for confirming the identity of the user. In the beginning of the card issuing process of the card issuing application 110, the card issuing application 110 may generate an personal encryption key and a personal decryption key (S52). Then, a card issuance request signal may be transmitted to the card service providing server 200 (S53). The card issuance request signal is transmitted to the card service providing server 200 together with the card applicant personal information and the personal encryption key generated in step S52. The personal information may include the information of terminal 100 and the terminal's user. The personal encryption key may be stored in the card service providing server 200, and the decryption key may be stored in the user terminal 100. When the card service providing server 200 receives the card issuance request signal, the card service providing server 200 may perform the identity verification and the credit verification step (S54) using the received personal information. If the identity verification and the credit verification are unsuccessful, a card issuance nonpermission message may be transmitted to the user terminal 100. If the identity verification and the credit verification are successful, the card information may be generated (S55). The card information may be encrypted with the server's own encryption key (S56). Then, the card information may be encrypted again with the personal encryption key which is was generated in step S52 and transmitted to the card service providing server 200 in step S53 (S57). The card information which was encrypted twice may be transmitted to the user terminal 100, the user terminal 100 may decrypt the double encrypted card information with the private decryption key which was generated together with the private encryption key in step S52 (S58). The electronic card may be installed in the user terminal 100 with the card information which was decrypted by the personal decryption key, but still ecrypted by the server encryption key (S59). The card payment application 120 stored in the user terminal 100 may be used when the card payment is requested with the electronic card which was installed in step S59. The card payment application 120 may provide a user interface related to the payment. For example, the payment application 120 may provide a user interface regarding a card registration, a payment, or a transaction. In addition, the payment app 120 may provide an interface associated with user authentication, for example, user authentication through identification and verification (ID & V). The card payment application 120 may transmit a payment approval request which includes card information which is encrypted with the server encryption key and personal information to the card service providing server 200 (S61). A card payment request signal including card information encrypted with the server encryption key and personal information of the user terminal 100 is transmitted to the card service providing server 200. The card service providing server 200 may performs the authentication step (S62) to determine whether the card service is permissible. If the authentication is successful, the card service providing server 200 may decrypt the card information with the server encryption key (S63), then the server 200 approve the payment (S64).

When the card is issued for a user by using the user terminal and the payment is performed with the issued card, only the user terminal with which the card issuance was applied and the personal encryption key and the personal decryption key were generated can receive and decrypted the card information, so only the user terminal can install the electronic card. Also, the server encryption key and the personal encryption key are used together, so the card information can be encrypted two times. Thus, the security of the card information can be enhanced.

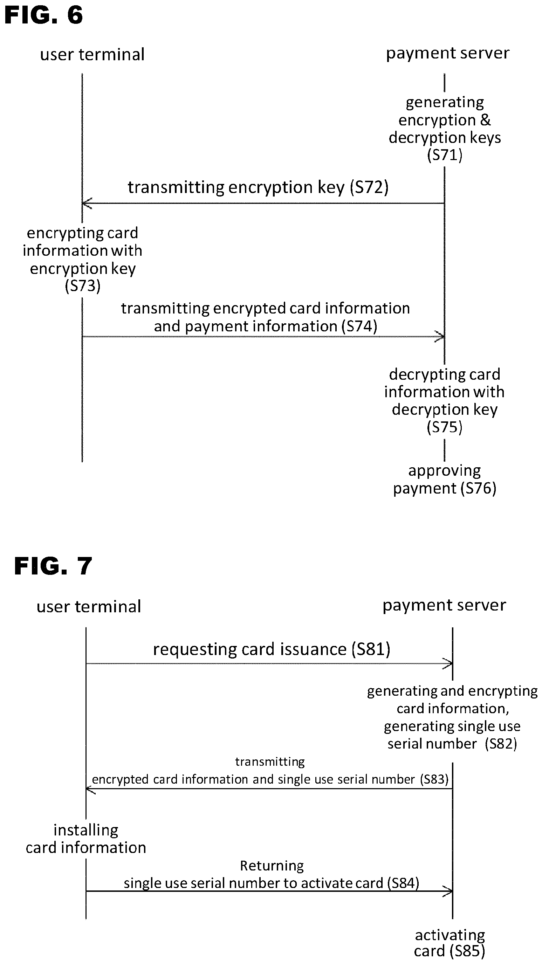

Fig. 6 is a flowchart showing a card payment method according to a fifth embodiment of the present invention. As shown in the figure, the card settlement method according to the fifth embodiment is as follows. The payment server 300 may generate a payment encryption key and a payment decryption key (S71). Then the payment server 300 may provide the payment encryption key to the user terminal 100 and may store the payment decryption key in the server 300 after mapping the payment decryption key with the user information or the card information of the terminal 100 (S72). When there is a payment of the card, the user terminal 100 may encrypt the card information with the payment encryption key for payment (S73) and may transmit the encrypted card information and payment information to the payment server 300 (S74). The payment server 300 may decrypt (S75) the card information with the payment decryption key which was generated in step S71 and performs payment approval processing (S76).

According to the card payment method of the fifth embodiment, the card information including a card number is encrypted in the payment server and transmited to the user terminal that has applied the card issuance, and the terminal does not have a decryption process. In addition, since the electronic card issuance is requested by a simple manner with the user terminal and the card information is not decrypted in the terminal and the card information can be used without being decrypted even when a payment approval is requested, the security of the card information can be enhanced.

Fig. 7 is a flowchart showing a card issuing method according to a sixth embodiment of the present invention. As shown in the figure, the card issuing method according to the sixth embodiment is as follows.

The user terminal 100 may transmit an application for issuing a card to the server 200 (S81). The server 200 may encrypt card information and generate a single use serial number with which the encrypted card information can be reconized(S82). Then, the server 200 may transmit the encrypted card information and the single use serial number to the terminal 100 (S83). The user terminal 100 may return the single use serial number to the server 200 for activation of the card (S84). When receiving the single use serial number, the server 200 may check if the received number matches with the single use serial number and may activate the card (S85). Encrypted card information may reveal a portion of the card number for identification of the user's card. The card issuing method according to the sixth embodiment can enhance the security of the card information in its storage because the electronic card issuance may be applied with the user terminal in simple manner and the card information does not decrypted by the use terminal even when the card is used for a payment.

According to the card payment method of the sixth embodiment, payment information for a payment approval may be encrypted with the encryption key which was generated at the time of issuing the card so that the card can be used only with the user terminal 100 in which the card was issued. Thus, the security in the card issuance and use can be further enhanced.

## Claims

1. A card issuing and payment system using a user terminal comprises:
a user terminal generating an encryption key and a decryption key and transmitting to a card service providing server the encryption key with a card issuance request signal and a user information; and
the card service providing server generating a card information after receiving the encryption key, the card issuance request signal and the user information from the user terminal, ecrypting the card information by using the encryption key received from the user terminal, and transmitting the encrypted card information to the user terminal,
wherein the user terminal decrypts the encrypted card information received from the card service providing server by using the decryption key and installs a card with the decrypted card information in the user terminal,
wherein the user terminal transmits a payment information and the installed card information to the card service providing server to request a card payment approval, and
wherein the card service providing server decrypts the encrypted card information by using the decryption key and approves a payment for the request of the user terminal.

2. The system of claim 1, wherein the card service providing server verifies at least one condition for a card issuance with the user information received from the user terminal and generates the card information based on a result of the verification.

3. A method of a card issuance and payment comprises:
generating, by a user terminal, an encryption key and a decryption key;
saving, by the user terminal, the encryption key and the decryption key in the user terminal;
transmitting, by the user terminal, the encryption key and a card issuance request signal to a card service providing server;
generating, by the card service providing server, a card information after receiving the card issuance request signal;
encrypting, by the card service providing server, the card information by using the encryption key;
transmitting, by the card service providing server, the encrypted card information;
decryting, by the user terminal, the encrypted card information with the decryption key;
installing, by the user terminal, a card with the decrypted card information in the user terminal;
transmitting, by the user terminal, a payment information and the installed card information to the card service providing server to request a card payment approval;
decrypting, by the card service providing server, the encrypted card information by using the decryption key; and
approving, by the card service providing server, a payment for the request of the user terminal.

4. The method of claim 3, wherein, in transmitting of the card issuance request signal, the user terminal transmits a user identifying information with the card issuance request to the card service providing server.signal.

5. The method of claim 3, wherein, in generating of the card information, the card service providing server verifies an identity and a credit of a user and generates the card information based on a result of the verification.

6. A computer readable storage medium, wherein the computer readable storage medium stores a set of computer instructions to execute each step of the card issuance and payment method of claim 3.
